# EUROPÄISCHE PATENTSCHRIFT

(11) **EP 3 231 692 B1**
(45) Veröffentlichungstag und Bekanntmachung des Hinweises auf die Patenterteilung: **01.01.2020**
(21) Anmeldenummer: 17164488.3
(22) Anmeldetag: 03.04.2017
(51) Int. Cl.: B60P 3/38, B60N 2/24, B60P 3/39, B60N 2/02, B60N 2/30

(54) **VERFAHREN UND VORRICHTUNG ZUR AUSWAHL UND AUTOMATISCHEN EINSTELLUNG EINER INNENRAUMKONFIGURATION EINES FAHRERHAUSES EINES NUTZFAHRZEUGS**
METHOD AND DEVICE FOR SELECTING AND AUTOMATIC SETTING OF AN INTERIOR CONFIGURATION OF A DRIVER'S CAB OF A COMMERCIAL VEHICLE
PROCÉDÉ ET DISPOSITIF DE SÉLECTION ET DE RÉGLAGE AUTOMATIQUE D'UNE CONFIGURATION D'UN HABITACLE D'UNE CABINE DE CONDUCTEUR D'UN VÉHICULE UTILITAIRE

(30) Priorität: 13.04.2016 DE 102016004530
(43) Veröffentlichungstag der Anmeldung: 18.10.2017
(60) Teilanmeldung: 19203330.6
(73) Patentinhaber: MAN Truck & Bus SE, 80995 München (DE)
(72) Erfinder: Jochum, Christina, 85716 Unterschleißheim (DE); Zellner, Christoph, 80339 München (DE); Siegl, Sebastian, 83646 Bad Tölz (DE)
(74) Vertreter: v. Bezold & Partner Patentanwälte - PartG mbB

(56) Entgegenhaltungen:
- WO-A1-2012/082052
- DE-U1-202006 011 756
- JP-A- 2000 272 383

## Beschreibung

Die Erfindung betrifft ein Verfahren zur Auswahl und automatischen Einstellung einer Innenraumkonfiguration eines Fahrerhauses eines Nutzfahrzeugs. Die Erfindung betrifft ferner eine Vorrichtung, die ausgebildet ist, eine Innenraumkonfiguration eines Fahrerhauses eines Nutzfahrzeugs auszuwählen und automatisch einzustellen. Die Erfindung betrifft ferner ein Kraftfahrzeug, insbesondere ein Nutzfahrzeug, mit einer derartigen Vorrichtung.

Der Alltag von LKW-Fernfahrern besteht nicht nur aus Fahren bzw. Be- und Entladen, also dem Arbeiten an und in dem Lastkraftwagen, sondern der Fahrer verbringt auch einen nicht unwesentlichen Anteil seiner Zeit mit Wohnen und Schlafen im Fahrerhaus, wenn Pausen zwischen den gesetzlichen Lenkzeiten eingehalten werden oder es zu Wartezeiten beim Kunden kommt. Ferner hält sich der Fahrer auch nach Arbeitsende im Fahrzeug auf, das auf einem Park- oder Rastplatz abgestellt ist.

Um eine komfortable Wohn- und Schlafqualität im Fahrerhaus zu erzeugen, die der Erholung und damit Verbesserung der Fahrtüchtigkeit dient, kann der Fahrer verschiedene Einstellungen innerhalb der Fahrerkabine vornehmen, die sich von den Einstellungen beim Arbeiten bzw. beim Fahren unterscheiden. So beginnt in der Regel nach Arbeitsende, wenn der LKW auf einem Parkplatz oder Rastplatz abgestellt ist, die Phase "Wohnen" und danach "Schlafen". An das Schlafen bzw. Übernachten im LKW werden sehr hohe Ansprüche gestellt, um dem Fahrer eine erholsame Nachtruhe zu ermöglichen. So unterscheiden sich üblicherweise auch die Einstellungen zwischen den Situationen "Wohnen" und "Schlafen" in der Fahrerkabine. Daher müssen alle Einstellungen der benötigten bzw. gewünschten Systeme jeden Tag einzeln und neu vorgenommen werden.

Um die Einstellungen von Ambientesystemen, wie z. B. des Radios, der Klimaanlage, der Elemente der Innenbeleuchtung sowie der Türverriegelung, im Fahrerhaus zu vereinfachen, schlägt die Offenlegungsschrift DE 10 2013 005 085 A1 ein Verfahren zum Einstellen von Ambientesystemen einer Fahrerkabine eines Nutzfahrzeugs für eine vorbestimmte Nutzungssituation vor. Das Verfahren umfasst das Erfassen und Speichern von Einstellungen der Ambientesysteme, die von der jeweiligen Nutzungssituation abhängig sind, durch eine Rechen- und Speichereinheit, die mit den Ambientesystemen gekoppelt ist. Diese von der Nutzungssituation abhängigen Einstellungen werden durch die Rechen- und Speichereinheit zusammengefasst und einer damit gekoppelten Umschaltungseinheit zugeordnet, so dass die nutzungssituationsabhängigen Einstellungen der Ambientesysteme allein durch die Betätigung dieser Umschaltungseinheit hergestellt werden. Dadurch wird der Komfort für den Anwender erhöht.

Ein Nachteil dieses Verfahrens ist, dass zwar eine nutzungssituationsabhängige Einstellung der Ambientesysteme ermöglicht wird, nicht jedoch der beweglichen Interieurelemente, wie z. B. einer Liegefläche des Fahrers, die im Wohnbetrieb im Vergleich zum Fahrbetrieb vergrößert und/oder ausgeklappt sein kann.

Aus der Praxis sind beispielsweise Interieurelemente eines Fahrerhauses eines Nutzfahrzeugs bekannt, die in unterschiedliche Verstellpositionen von einer Fahrstellung in eine Wohnstellung bringbar sind, um den im Nicht-Fahrbetrieb nutzbaren Wohnraum in dem Fahrerhaus effizienter nutzen zu können. So ist beispielsweise aus der deutschen Offenlegungsschrift DE 199 43 539 A1 eine Fahrerkabine für einen Lastkraftwagen bekannt, deren Innenraum durch ein Modul vergrößerbar ist, das wenigstens ein zur Außenhaut der Fahrerkabine gehörendes Abdeckelement umfasst. Zur Vergrößerung des Kabinenvolumens ist das Modul aus einer eingefahrenen Gebrauchsstellung in eine ausgefahrene Gebrauchsstellung verlagerbar. Der Freiraum zwischen den Umfangsseiten des Moduls und den korrespondierenden Umfangsseiten der Fahrerkabine ist in der ausgefahrenen Gebrauchsstellung durch Abdeckmittel geschlossen. In der ausgefahrenen Gebrauchsstellung des Moduls wird für die Insassen bei abgestelltem Fahrzeug ein größerer Innenraum geschaffen, der beispielsweise als Schlafbereich nutzbar ist. Demgegenüber ist die Fahrerkabine im Fahrbetrieb auf die eingefahrene Gebrauchsstellung verkürzbar, um eine unerwünschte Verlängerung der Fahrerkabine zu vermeiden.

Aus der Offenlegungsschrift EP 1 544 088 A1 ist eine Fahrerkabine für einen Lastkraftwagen bekannt, deren Innenraum durch ein Modul vergrößerbar ist, das zur Vergrößerung des Innenraums aus einer eingefahrenen Gebrauchsstellung in eine ausgefahrene Gebrauchsstellung verlagerbar ist, wobei an dem Modul mindestens eine Befestigungseinrichtung angebracht ist, mit deren Hilfe Innenraumeinrichtungsgegenstände aus einer Fahrstellung in eine Wohnstellung verlagerbar sind.

Nachteilig bei den bekannten Ausgestaltungen der Fahrerkabine ist, dass ein Fahrer einzelne Interieurelemente der Fahrerkabine manuell von einer Fahrstellung in die Wohnstellung bringen muss, was zeitaufwändig ist und daher den Nutzungskomfort beeinträchtigt.

Aus der DE 20 2006 011 756 U1 ist ferner ein wegstaubares Bett für ein Fahrzeug bekannt, das Mittel zum Absenken in eine Gebrauchsstellung sowie zum Anheben in eine Nichtgebrauchsstellung umfasst. Das Auf- und Abbewegen des Bettes erfolgt dabei motorisiert, wobei ein automatisches Abschalten des Antriebs erfolgt, falls die jeweilige Endstellung erreicht ist. Nachteilig ist jedoch weiterhin, dass die Verstellung des Interieurelements zunächst manuell aktiviert werden muss.

Es ist somit eine Aufgabe der Erfindung, einen verbesserten Ansatz zur optimierten Nutzung des Raumangebots in einem Fahrerhaus bereitzustellen, mit dem Nachteile herkömmlicher Techniken vermieden werden können. Die Aufgabe der Erfindung ist es insbesondere, ein Verfahren bereitzustellen, mit dem der nutzbare Innenraum eines Fahrerhauses auf einfache Weise bedarfsgerecht angepasst werden kann. Eine weitere Aufgabe ist es, eine entsprechend ausgebildete Vorrichtung bereitzustellen.

Diese Aufgaben werden durch Vorrichtungen und Verfahren mit den Merkmalen der unabhängigen Ansprüche gelöst. Vorteilhafte Ausführungsformen und Anwendungen der Erfindung ergeben sich aus den abhängigen Ansprüchen und werden in der folgenden Beschreibung unter teilweiser Bezugnahme auf die Figuren näher erläutert.

Gemäß einem ersten Gesichtspunkt der Erfindung wird ein Verfahren zur Auswahl und automatischen Einstellung einer Innenraumkonfiguration eines Fahrerhauses eines Nutzfahrzeugs bereitgestellt. Gegebenenfalls wird im Rahmen der vorliegenden Erfindung statt des Begriffs "Fahrerhaus" auch der Begriff "Fahrerkabine" verwendet. Beide Begriffe sind im Rahmen der vorliegenden Erfindung als gleichbedeutend anzusehen.

Gemäß dem erfindungsgemäßen Verfahren wird eine Innenraumkonfiguration des Fahrerhauses aus einer Mehrzahl von vorgegebenen Innenraumkonfigurationen ausgewählt, wobei jede Innenraumkonfiguration mindestens einem Interieurelement des Fahrerhauses jeweils eine Verstellposition zuordnet. Bei den Interieurelementen handelt es sich um Bauteile im Innenraum des Fahrerhauses, die in unterschiedliche Verstellpositionen bewegt werden können, so dass für ein solches Interieurelement je nach ausgewählter Innenraumkonfiguration unterschiedliche Verstellpositionen vorgegeben werden können. Die unterschiedlichen Verstellpositionen eines Interieurelements umfassen insbesondere eine erste Verstellposition, die für einen Fahrbetrieb des Fahrzeugs vorgesehen ist und als Fahrstellung bezeichnet wird, sowie mindestens eine zweite Position, die für einen Nicht-Fahrbetrieb vorgesehen ist und als Wohnstellung bezeichnet wird.

Das Verfahren umfasst ferner das automatische Einstellen der ausgewählten Innenraumkonfiguration, wobei das mindestens eine Interieurelement jeweils aus einer bisherigen Verstellposition in eine der ausgewählten Innenraumkonfiguration zugeordnete Verstellposition bewegt wird. Zur Erzeugung der zur Verstellbewegung des jeweiligen Interieurelements erforderlichen Verstellkraft ist jedem Interieurelement ein Verstellantrieb zugeordnet. Unterschiedliche Innenraumkonfigurationen können sich durch ein unterschiedliches Raumangebot, z. B. durch eine unterschiedliche Bewegungsfreiheit, für eine Person im Fahrerhaus unterscheiden.

Gemäß dem Verfahren ist somit mindestens ein Interieurelement durch einen Stellantrieb automatisch bewegbar, um unterschiedliche Verstellpositionen einnehmen zu können. Eine Bewegung zur Einstellung unterschiedlicher Verstellpositionen eines Interieurelements des Fahrerhauses in diese Sinne kann beispielsweise eine Verfahrbewegung, eine Kippbewegung und/oder eine Drehbewegung des Interieurelements oder eines Teil des Interieurelements sein. Eine Verstellposition kann entsprechend durch eine Verfahrposition, eine Kippposition und/oder eine Drehposition des Interieurelements oder eines Teil des Interieurelements festgelegt sein. Zwei verschiedene Innenraumkonfigurationen unterscheiden sich demnach in der Verstellposition mindestens eines Interieurelements, vorzugsweise in den Verstellpositionen mehrere Interieurelemente.

Ein besonderer Vorzug der Erfindung liegt somit darin, dass zur Anpassung des Raumangebots und der Bewegungsfreiheit im Innenraum des Fahrerhauses unterschiedliche Innenraumkonfigurationen des Fahrerhauses definiert und im Fahrzeug hinterlegt werden, die bei Bedarf abgerufen und automatisch mittels der Stellantriebe eingestellt werden können, so dass ein manuelles Verstellen einzelner Interieurelemente entfallen kann. Dies ist besonders vorteilhaft, wenn eine Innenraumkonfiguration mehreren Interieurelementen jeweils für einen bestimmten Nutzungszweck angepasste Verstellpositionen zuordnet.

Ein Interieurelement, dem unterschiedliche Verstellpositionen zugeordnet sein können, kann ein Fahrersitz, ein Beifahrersitz, eine Liege, ein Tisch, ein Lenkrad, eine Kühlbox, ein Hubdach, ein Staufach oder eine andere in unterschiedliche Verstellpositionen bringbare Komponente des Fahrerhausinnenraums sein. Diese Interieurelemente sind besonders geeignet, durch eine Änderung ihrer Verstellposition das nutzbare Raumangebot zu verändern, um das Platzangebot bzw. die Bewegungsfreiheit des Fahrers an unterschiedliche Nutzungssituationen anzupassen. Vorzugsweise ordnet eine Innenraumkonfiguration mindestens zwei, weiter vorzugsweise mindestens drei dieser Interieurelemente jeweils eine Verstellposition zu.

Erfindungsgemäß wird in Abhängigkeit von den Signalen einer Sensoreinrichtung eine Nutzungssituation des Innenraums des Fahrerhauses bestimmt, beispielsweise durch eine entsprechend ausgebildete Steuereinrichtung. Anschließend wird die Innenraumkonfiguration aus der Mehrzahl von vorgegebenen Innenraumkonfigurationen anhand der bestimmten Nutzungssituation ausgewählt. Ein besonderer Vorzug dieser Lösung liegt darin, dass ein Raumangebot des Fahrerhausinnenraums automatisch an eine erkannte Nutzungssituation angepasst werden kann. Hierzu können vorab in einer Steuereinrichtung verschiedene Nutzungssituation jeweils anhand eines bestimmten Musters und/oder einer Abfolge von Sensorsignalen hinterlegt sein. Wird ein vorbestimmtes Muster und/oder eine vorbestimmte Abfolge von Sensorsignalen erkannt, kann auf eine bestimmte Nutzungssituation geschlossen werden. Diejenige Innenraumkonfiguration, die dieser Nutzungssituation bzw. dem vorbestimmten Muster und/oder der vorbestimmten Abfolge von Sensorsignalen vorab zugeordnet wurde und die für diese Nutzungssituation besonders vorteilhaft ist, wird dann automatisch ausgewählt und automatisch eingestellt. Mit anderen Worten ist einem bestimmten Muster und/oder einer Abfolge von Sensorsignalen eine Innenraumkonfiguration zugeordnet, so dass diese automatisch in Abhängigkeit von einem bestimmten Signal der Sensoreinrichtung ausgewählt werden kann.

Erfindungsgemäß ist die Sensoreinrichtung dabei ausgeführt, zu erfassen, ob ein Fahrer den Fahrersitz in Richtung Außenbereich oder in Richtung Wohnbereich des Fahrerhauses verlässt, wobei, falls erfasst wird, dass der Fahrer den Fahrersitz in Richtung Außenbereich verlässt, die Ein-/Ausstiegskonfiguration ausgewählt wird, und falls erfasst wird, dass der Fahrer den Fahrersitz in Richtung Wohnbereich des Fahrerhauses verlässt, eine der Nicht-Fahrbetriebskonfigurationen ausschließlich der Ein-/Ausstiegskonfiguration ausgewählt wird.

Mit dem erfindungsgemäßen Verfahren können ferner verschiedene Nutzungssituationen definiert werden, in denen der Nutzer, der vorliegend in der Regel der Fahrer des Nutzfahrzeugs ist, bestimmte Tätigkeiten ausführt. Eine dieser Nutzungssituationen ist der reguläre Fahrbetrieb, währenddessen der Fahrer sich auf dem Fahrersitz befindet und das Fahrzeug steuert. Der Nutzer hält sich auf einer Fernfahrt in der Fahrerkabine nicht nur beim Fahren, sondern auch zum Wohnen und Schlafen auf, so dass hier zumindest zwei Nutzungssituationen vorliegen, in denen der Innenraum der Fahrerkabine unterschiedlich genutzt wird: "Fahren", d. h. ein Fahrbetrieb des Fahrzeugs, und "Wohnen", d. h. ein Nicht-Fahrbetrieb des Fahrzeugs, bei dem sich der Nutzer in der Fahrerkabine aufhält.

Bei der Nutzungssituation "Wohnen" kann beispielsweise ferner unterschieden werden zwischen einer Nutzungssituation "Schlafen", die das Einschlafen, den Schlaf und das Aufwachen umfasst, einer Nutzungssituation "Bürotätigkeiten", die das Ausführen von Bürotätigkeiten im Fahrerhaus wie z. B. Dokumentationen vor Lieferungen etc. umfasst, einer Nutzungssituation "Kochen/Essen", bei der Mahlzeiten im Fahrerhaus zubereitet und/oder konsumiert werden", einer Nutzungssituation "Rauchen", bei der im Fahrerhaus geraucht wird, einer Nutzungssituation "Einstieg/Ausstieg", bei der Nutzer in das Fahrerhaus einsteigt oder aus diesem aussteigt, und einer Nutzungssituation "Ruhen", wobei der Fahrer sich im Vergleich zum "Schlafen" für eine kürzere Zeit ausruht.

Alternativ oder zusätzlich zur automatischen Auswahl der Innenraumkonfiguration besteht ferner die Möglichkeit, dass eine Innenraumkonfiguration aus der Mehrzahl von vorgegebenen Innenraumkonfigurationen über eine von einem Nutzer betätigbare Auswahleinrichtung, z. B. über einen Schalter oder eine Spracheingabe etc., ausgewählt wird.

Die Mehrzahl von vorgegebenen Innenraumkonfigurationen kann beispielsweis eine Fahrbetriebskonfiguration umfassen, in der dem mindestens einen Interieurelement jeweils eine Verstellposition für den Fahrbetrieb (die Fahrstellung) zugeordnet ist. Ferner kann mindestens eine Nicht-Fahrbetriebskonfiguration bereitgestellt werden, mittels derer das Raumangebot und die Bewegungsfreiheit für eine Nutzung des Fahrerhauses während eines Nicht-Fahrbetriebs optimiert ist. In einer Nicht-Fahrbetriebskonfiguration ist dem mindestens einen Interieurelement eine Verstellposition für den Nicht-Fahrbetrieb zugeordnet (die Wohnstellung).

Beispielsweise können in einer Nicht-Fahrbetriebskonfiguration einzelnen Interieurelementen folgende Verstellpositionen zugeordnet sein:
Den Sitzen, z. B. dem Fahrersitz und/oder dem Beifahrersitz, kann eine Verstellposition zugeordnet sein, die im Vergleich zu einer Fahrbetriebsstellung näher am Cockpit ist, d. h., die Sitze fahren beim Übergang von einer Fahrstellung in eine Wohnstellung nach vorne. Ferner kann die Drehstellung mindestens eines Sitzes im Vergleich zu einer Fahrstellung um eine Vertikalachse gedreht sein, beispielsweise um 180°, so dass der Sitz in Richtung Wohnbereich gedreht ist. Ferner kann dem Lenkrad die aus dem Nutzfahrzeugbereich bekannte Parkposition zugeordnet sein, so dass das Lenkrad beim Einstellen einer Nicht-Fahrbetriebs-konfiguration automatisch in die Parkposition verfährt. Ferner kann dem Hubdach eine ausgefahrene Verstellposition zugeordnet sein. Durch diese Maßnahmen wird jeweils die Bewegungsfreiheit im Wohnbereich des Fahrerhauses erhöht.

Ferner kann mindestens einer Sitzrückenlehne eine um eine Horizontalachse gekippte Verstellposition zugeordnet sein. Zur Ausbildung einer Tischfläche kann einer Rückenlehne eine horizontale Verstellposition als Wohnstellung zugeordnet sein. Ferner kann in einer Nicht-Fahrbetriebskonfiguration der Kühlbox eine ausgefahrene Verstellposition zugeordnet sein, zur verbesserten Zugänglichkeit der Kühlbox im Wohnbereich des Fahrerhauses.

Entsprechend den vorgenannten typischen Nutzungssituationen wie z. B. "Fahren", "Schlafen", "Bürotätigkeiten", "Ruhe", "Kochen/Essen", "Einstieg/Ausstieg" etc. können eine oder mehrere der nachfolgenden Innenraumkonfigurationen vorgegeben und einstellbar sein.

So kann eine Innenraumkonfiguration bereitgestellt werden, die dem mindestens einen Interieurelement eine Verstellposition zuordnet, die besonders geeignet ist, wenn der Fahrer im Fahrerhaus schlafen möchte. Diese Innenraumkonfiguration, bei der das Raumangebot hinsichtlich eines Schlafvorgangs des Fahrers auf einer Liege im Fahrerhaus optimiert ist, wird nachfolgend als Schlafkonfiguration bezeichnet. Beispielsweise kann in der Schlafkonfiguration den Sitzen eine Verstellposition zugeordnet sein, bei der die Sitzfläche im Vergleich zu einer Fahrbetriebsstellung näher an das Cockpit verfahren ist. In der Schlafkonfiguration kann einer Liegefläche eine Verstellposition zugeordnet sein, bei der die Liegefläche ausgefahren, ausgeklappt und/oder vergrößert ist. In der Schlafkonfiguration kann einer Rückenlehne eines Sitzes eine Verstellposition zugeordnet sein, in der die Rückenlehne eingeklappt ist, vorzugsweise in eine Horizontalstellung.

Ferner kann eine weitere Innenraumkonfiguration bereitgestellt werden, die dem mindestens einen Interieurelement eine Verstellposition zuordnet, die besonders geeignet ist, wenn der Fahrer sich im Fahrerhaus ausruhen, aber nicht notwendigerweise schlafen möchte. Diese Innenraumkonfiguration wird nachfolgend als Ruhekonfiguration bezeichnet. Hierbei verlässt der Fahrer in der Regel die Fahrposition. Er befindet sich dann entweder auf dem Sitz oder auf der Liegefläche. Wird anhand der Signale der Sensorvorrichtung erkannt, dass der Fahrer sich nicht mehr in der Fahrposition, aber immer noch auf dem Fahrersitz befindet, dann sind die Verstellpositionen der Ruhekonfiguration so festgelegt, dass Rückenlehne zurückfährt, das Lenkrad in Parkposition fährt und der Sitz zur Beinfreiheitoptimierung zurückfährt. Wird anhand der Signale der Sensorvorrichtung erkannt, dass der Fahrer sich auf der Liegefläche befindet oder in Richtung Liegefläche bewegt, dann sind die Verstellpositionen der Ruhekonfiguration so festgelegt, dass die Sitze nach vorne fahren, die Rückenlehne zur Tischgewinnung nach vorne klappt und die Liegefläche zur Verfügung gestellt wird und/oder vergrößert wird. Ferner kann die Hubdachstellung angepasst werden.

Ferner kann eine weitere Innenraumkonfiguration bereitgestellt werden, die zur Optimierung eines Einstiegsvorgang in das Fahrerhaus und/oder eines Ausstiegsvorgang aus dem Fahrerhaus vorgesehen ist. Diese Innenraumkonfiguration wird nachfolgend als Ein-/Ausstiegskonfiguration bezeichnet. Gemäß der Ein-/Ausstiegskonfiguration ist dem Fahrersitz eine Verstellposition zugeordnet ist, in der sich der Fahrersitz im Vergleich zu einer Fahrbetriebsstellung in einer tieferen oder höheren und/oder zurückversetzten Stellung befindet, wodurch das Ein- und Aussteigen erleichtert wird. Gemäß der Ein-/Ausstiegskonfiguration kann dem Lenkrad ferner die Parkposition als Verstellposition zugeordnet sein.

Ferner kann eine weitere Innenraumkonfiguration bereitgestellt werden, die vorteilhaft ist, wenn das Fahrerhaus gekippt werden soll. Diese Innenraumkonfiguration wird nachfolgend als Kippkonfiguration bezeichnet. Diese Innenraumkonfiguration ist darauf ausgerichtet, die persönlichen Gegenstände zu sichern, damit diese bei einem Kippvorgang des Fahrerhauses nicht herumfliegen können. Gemäß der Kippkonfiguration ist einer der Liegefläche eine eingeklappte und/oder eingefahrene Verstellposition, den verschließbaren Staufächern eine verschlossene Verstellposition und dem Hubdach eine eingefahrene Verstellposition zugeordnet.

Ferner kann eine weitere Innenraumkonfiguration bereitgestellt werden, die besonders vorteilhaft ist, wenn der Fahrer im Fahrerhaus eine Mahlzeit zubereiten und/oder essen möchte. Gemäß dieser Innenraumkonfiguration werden eine oder mehrere als Tisch nutzbare Flächen bereitgestellt, z. B. durch Verkippen einer Rückenlehne in eine Horizontalstellung. Ferner kann eine Kühlbox oder ein Vorratsfach ausgefahren werden, derart, dass sie im Wohnbereich leichter zugänglich sind. Ferner kann die Hubdachstellung angepasst werden, z. B. durch Ausfahren des Hubdaches. Andere, für das Zubereiten oder Konsumieren von Mahlzeiten nicht benötigte Interieurelemente können gemäß dieser Innenraumkonfiguration eingefahren sein.

Ferner kann eine weitere Innenraumkonfiguration bereitgestellt werden, die besonders vorteilhaft ist, wenn der Fahrer im Fahrerhaus Bürotätigkeiten, wie Dokumentationen etc., erledigen will. Gemäß dieser Innenraumkonfiguration werden wiederum eine oder mehrere als Tisch(e) nutzbare Flächen bereitgestellt, und/oder dem Sitz wird eine aufrechte Verstellposition zugeordnet.

Ferner kann eine weitere Innenraumkonfiguration bereitgestellt werden, die besonders vorteilhaft ist, wenn der Fahrer im Fahrerhaus rauchen möchte. Gemäß dieser Konfiguration kann ein Aschenbecher ausgefahren und/oder geöffnet werden. Ferner kann Luftzufuhr z. B. durch Öffnen der Fenster und/oder des Schiebe- bzw. Hubdachs verbessert werden. Diese Innenraumkonfiguration kann auch mit einer der anderen Innenraumkonfigurationen kombiniert werden.

Die Erfindung ist hinsichtlich der Ausgestaltung der Sensoreinrichtung zur Erfassung und/oder Vorhersage einer Nutzungssituation nicht auf eine bestimmte Ausgestaltung der Sensoreinrichtung beschränkt. Lediglich beispielhaft werden nachfolgend einige Möglichkeiten beschrieben, welche Signale einzeln oder in Kombination zur Erfassung einer Nutzungssituation herangezogen werden können.

Die Sensoreinrichtung kann beispielsweise ein Zündsignal Aus/Ein des Fahrzeugs erfassen. Bei einem Zündsignal "Ein" kann auf einen Fahrbetrieb oder auf einen unmittelbar bevorstehenden Fahrbetrieb (Nutzungssituation "Fahren") geschlossen werden; bei Zündsignal "Aus" kann auf einen Nicht-Fahrbetrieb (Nutzungssituation "Wohnen") geschlossen werden.

Ferner kann die Sensoreinrichtung einzeln oder in Kombination eines der folgenden Signale verwenden: ein Signal, das indikativ für eine Sitzplatzbelegung ist, ein Sprach- oder Geräuschsignal aus dem Fahrerhaus, ein Signal, das eine Aktivierung einer Kippvorrichtung des Fahrerhaus anzeigt, ein Signal, das indikativ für eine Interaktion mit mindestens einem Interieurelement und/oder einem im Fahrerhaus angeordneten elektrischen Gerät ist, und/oder ein Signal, das indikativ für einen Beleuchtungszustand im Fahrerhaus ist. Ferner kann die Sensoreinrichtung ausgebildet sein, aus dem Zustand der Innenraumbeleuchtung des Fahrerhauses eine Nutzungssituation abzuleiten. Ferner kann die Sensoreinrichtung ausgebildet zu sein, aus einer Standort- bzw. GPS-Information und aus Umgebungsdaten (z. B. Fahrzeug befindet auf einer Raststätte, an einer Zapfsäule, auf einem Seitenstreifen etc.) eine Nutzungssituation abzuleiten. Ferner können Daten des Fahrtenschreibers ausgewertet werden.

Beispielsweise kann die Sensoreinrichtung ausgebildet zu sein, ein Ausgabesignal einer Kamera, die zur Überwachung des Fahrerhausinnenbereichs ausgebildet ist, zu verwenden, um eine Nutzungssituation zu bestimmen und/oder eine Innenraumkonfiguration auszuwählen. Derartige Kameras sind in Nutzfahrzeugen beispielsweise zur Müdigkeitsüberwachung des Fahrers vorgesehen. Anhand dieses Kamerasignals kann erfasst werden, ob ein Fahrer seinen Sitzplatz verlässt und ob er sich in Richtung Tür oder in Richtung hinterer Bereich des Fahrerhauses, dem Wohnbereich, bewegt. Wird ersteres erkannt, kann auf einen Aussteigevorgang geschlossen werden und die hierfür vorgesehene Ein-/Ausstiegskonfiguration ausgewählt werden, die vorstehend erläutert wurde. Wird erkannt, dass der Fahrer sich vom Fahrersitz in Richtung Wohnbereich des Fahrerhauses bewegt, kann eine der hierfür vorgesehenen Innenraumkonfigurationen ausgewählt werden, oder die Auswahl einer Innenraumkonfiguration kann zumindest auf Nicht-Fahrbetriebskonfigurationen ausschließlich der Ein-/Ausstiegskonfiguration eingeschränkt werden.

Das Kamerasignal kann mit dem Zündsignal, dem Signal eines Sitzplatzsensors und/oder dem Signal eines Türöffnungssensors kombiniert werden, was die Erkennungszuverlässigkeit erhöht.

Gemäß einem weiteren Aspekt kann jeder Innenraumkonfiguration eine Innenraumbeleuchtungseinstellung des Fahrerhauses zugeordnet sein, so dass für jede Nutzungssituation ein angepasstes Lichtangebot bereitgestellt wird. So kann in der Schlafkonfiguration das Licht ausgeschaltet oder gedimmt werden und in der Innenraumkonfiguration zur Durchführung von Bürotätigkeiten eine andere Lichteinstellung, z. B. mit höherer Intensität, eingestellt werden.

Gemäß einem zweiten Gesichtspunkt der Erfindung wird eine Vorrichtung bereitgestellt, die ausgebildet ist, das Verfahren zur Auswahl und automatischen Einstellung einer Innenraumkonfiguration eines Fahrerhauses eines Nutzfahrzeugs, wie in diesem Dokument beschrieben, durchzuführen. Die Vorrichtung umfasst vorzugsweise eine Steuereinrichtung, die ausgebildet ist, in Abhängigkeit von den Signalen einer Sensoreinrichtung und/oder einer Auswahleinrichtung eine Innenraumkonfiguration des Fahrerhauses aus einer Mehrzahl von vorgegebenen Innenraumkonfigurationen auszuwählen, wobei jede Innenraumkonfiguration mindestens einem Interieurelement des Fahrerhauses jeweils eine Verstellposition zuordnet. Die Steuereinrichtung ist ferner ausgebildet, die ausgewählte Innenraumkonfiguration einzustellen, wobei das mindestens eine Interieurelement jeweils aus einer bisherigen Verstellposition in eine der ausgewählten Innenraumkonfiguration zugeordnete Verstellposition bewegt wird, mittels eines dem jeweiligen Interieurelement zugeordneten Verstellantriebs zur Erzeugung der zur Verstellbewegung des jeweiligen Interieurelements erforderlichen Verstellkraft.

Gemäß einem weiteren Aspekt können die Innenraumkonfigurationen werksseitig in der Vorrichtung zur Durchführung des Verfahrens oder in einer hiermit gekoppelten Speichereinrichtung abgelegt sein und seitens des Benutzers angepasst und ergänzt werden. Mit anderen Worten kann der Benutzer Vorkonfigurationen der unterschiedlichen Verstellpositionen der Interieurelemente an seine Wünsche oder Bedürfnisse anpassen.

Die Erfindung betrifft ferner ein Nutzfahrzeug, aufweisend eine derartige Vorrichtung.

Zur Vermeidung von Wiederholungen sollen rein verfahrensgemäß offenbarte Merkmale auch als vorrichtungsgemäß offenbart gelten und beanspruchbar sein und vice versa. Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: eine schematische Darstellung einer Innenraumkonfiguration für den Fahrbetrieb gemäß einem Ausführungsbeispiel der Erfindung;
- Figur 2: eine schematische Darstellung einer Innenraumkonfiguration für einen Nicht-Fahrbetrieb gemäß einem Ausführungsbeispiel der Erfindung; und
- Figur 3: ein Ablaufdiagramm zur Illustration eines Verfahrens gemäß einer Ausführungsform der Erfindung.

Gleiche oder funktional äquivalente Elemente sind in allen Figuren mit denselben Bezugszeichen bezeichnet.

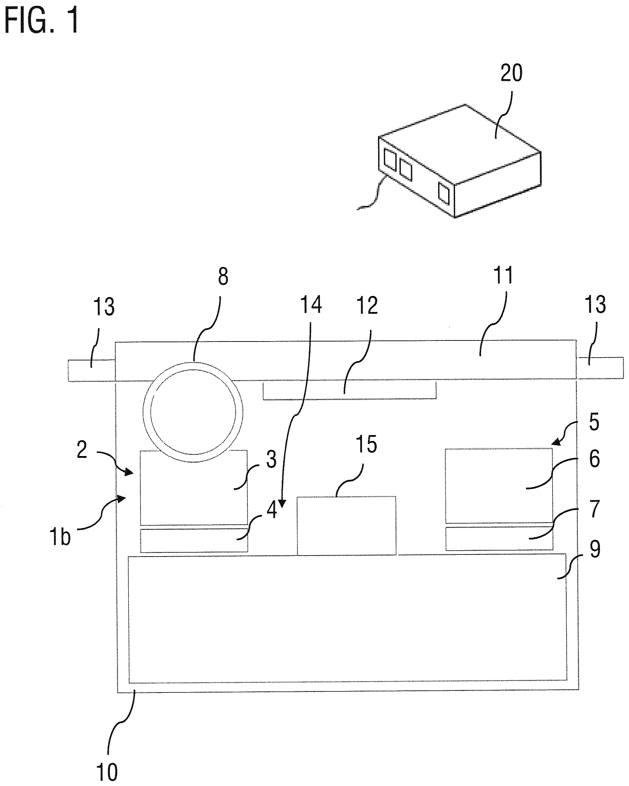

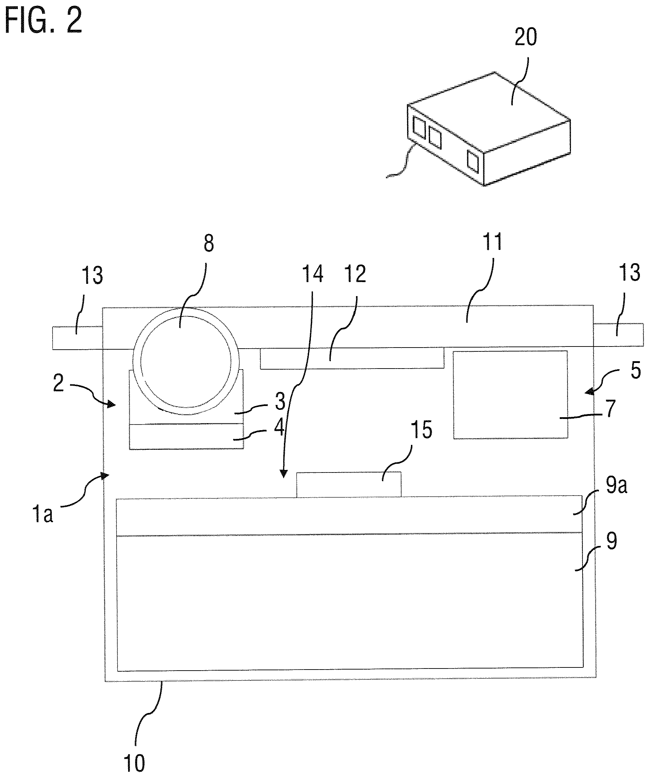

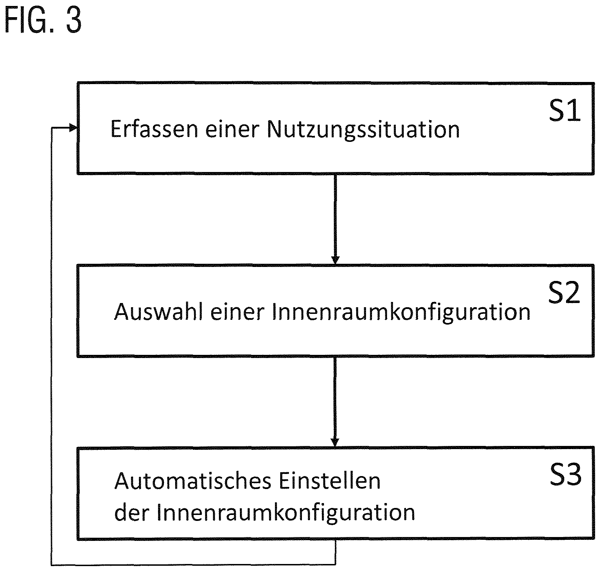

Um das für eine im Fahrerhaus befindliche Person nutzbare Raumangebot an unterschiedliche Nutzungssituationen anpassen zu können, sind verschiedene, vorab festgelegte Innenraumkonfigurationen des Fahrerhauses 10 im Fahrzeug hinterlegt, beispielsweise in eine Steuereinrichtung 20. In den Figuren 1 und 2 sind beispielhaft zwei derartige Innenraumkonfigurationen 1a, 1b für die beweglichen Interieurelemente des Fahrerhauses 10 dargestellt. Figur 1 stellt die Innenraumkonfiguration 1a für einen Fahrbetrieb vor, während Figur 2 die Innenraumkonfiguration 1b für einen Nicht-Fahrbetrieb, d. h. für die Nutzungssituation "Wohnen", darstellt. Wie aus dem Vergleich der Figuren 1 und 2 erkennbar ist, unterscheidet sich die Innenraumkonfiguration 1b für die Nutzungssituation "Wohnen" dadurch, dass die Sitzflächen 3, 6 der Sitze 2, 5 hin zum Armaturenbrett bzw. Cockpit 11 verschoben wurden, um die Bewegungsfreiheit im Wohnbereich 14 zu vergrößern. Gleiches gilt für das Lenkrad 8, das sich in der Figur 3 in der Parkposition befindet. Zusätzlich ist die Liegefläche 9 vergrößert, dargestellt durch den zusätzlich ausgefahrenen Abschnitt 9a. Ferner ist die Kühlbox 15 in den Wohnbereich 14 ausgefahren, damit diese leichter zugänglich ist. Ferner ist das Hubdach ausgefahren (nicht dargestellt). Ferner ist die Rückenlehne 7 des Beifahrersitzes 5 in eine Horizontalstellung verkippt, um eine Tischfläche bereitzustellen.

Die hinterlegten Innenraumkonfiguration können bei Bedarf von einem Nutzer ausgewählt werden, beispielsweise mittels einer Auswahleinrichtung, woraufhin die ausgewählte Innenraumkonfiguration automatisch mittels der jeweiligen Stellantriebe, die jedem der Interieurelemente zugeordnet sind, eingestellt werden. Wählt der Nutzer beispielsweise die Innenraumkonfiguration 1b Wohnen gemäß Figur 2 aus, bewegen sich die vorstehend beschriebenen Interieurelemente automatisch von der in Figur 1 gezeigten Verstellposition in die in Figur 2 gezeigte Verstellposition, wobei die Steuereinrichtung 20 die den Interieurelementen zugeordneten Verstellantriebe entsprechend ansteuert.

Alternativ kann die Innenraumkonfiguration aus der Mehrzahl an verfügbaren Innenraumkonfigurationen auch automatisch anhand der Signale einer Sensoreinrichtung ausgewählt werden, was schematisch in Figur 3 erläutert ist.

In Schritt S1 wird fortlaufend ein Innenraum der Fahrerkabine mittels einer Sensoreinrichtung überwacht, um zu erfassen, wann sich eine aktuelle Nutzungssituation ändert.

Beispielsweise kann die Sensoreinrichtung ausgebildet zu sein, ein Ausgabesignal einer Kamera, die zur Überwachung des Fahrerhausinnenbereichs ausgebildet ist, zu verwenden, um eine Nutzungssituation zu bestimmen und/oder eine Innenraumkonfiguration auszuwählen. Derartige Kameras sind in Nutzfahrzeugen beispielsweise zur Müdigkeitsüberwachung des Fahrers vorgesehen. Anhand dieses Kamerasignals kann erfasst werden, ob ein Fahrer seinen Sitzplatz verlässt und ob er sich Richtung Tür oder Richtung Fahrerhausinnenbereich, d. h. dem Wohnbereich im Fahrerhaus hinter dem Fahrzeugsitz, bewegt. Wird beispielsweise erkannt, dass der Fahrer sich vom Fahrersitz 2 Richtung Wohnbereich 14 des Fahrerhauses 10 bewegt, wird dann in Schritt S2 eine der hierfür vorgesehenen Innenraumkonfigurationen ausgewählt, z. B. die in Figur 2 gezeigte, und anschließend in Schritt S3 automatisch eingestellt. Auf diese Weise kann eine automatische Anpassung am Raumangebot erfolgen, die eine bessere Bewegungsfreiheit für den Nutzer in der jeweiligen Nutzungssituation und damit ein gesteigertes Raumgefühl ermöglicht.

### Bezugszeichenliste

- 1a: Innenraumkonfiguration Fahrbetrieb
- 1b: Innenraumkonfiguration Wohnen
- 2: Fahrersitz
- 3, 6: Sitzfläche
- 4, 7: Rückenlehne
- 5: Beifahrersitz
- 8: Lenkrad
- 9: Liegefläche
- 9a: Erweiterung der Liegefläche
- 10: Fahrerhaus
- 11: Cockpit/Armaturenbrett
- 12: Ablagefläche
- 13: Spiegel
- 14: Wohnbereich
- 15: Kühlbox
- 20: Steuereinrichtung

## Patentansprüche

1. Verfahren zur Auswahl und automatischen Einstellung einer Innenraumkonfiguration (1a, 1b) eines Fahrerhauses (10) eines Nutzfahrzeugs, umfassend die Schritte:
a) Auswählen einer Innenraumkonfiguration des Fahrerhaus (10) aus einer Mehrzahl von vorgegebenen Innenraumkonfigurationen (1a, 1b), wobei jede Innenraumkonfiguration mindestens einem Interieurelement des Fahrerhauses (10) jeweils eine Verstellposition zuordnet (S2), wobei ein Interieurelement aus einer Fahrstellung in mindestens eine Wohnstellung und vice versa bewegbar ist,
b) Automatisches Einstellen der ausgewählten Innenraumkonfiguration (S3), wobei das mindestens eine Interieurelement jeweils aus einer bisherigen Verstellposition in eine der ausgewählten Innenraumkonfiguration zugeordnete Verstellposition bewegt wird, mittels eines dem jeweiligen Interieurelement zugeordneten Verstellantriebs zur Erzeugung der zur Verstellbewegung des jeweiligen Interieurelements erforderlichen Verstellkraft,
wobei eine Nutzungssituation des Innenraums des Fahrerhauses (10) in Abhängigkeit von Signalen einer Sensoreinrichtung bestimmt wird (S1) und dass die Innenraumkonfiguration aus der Mehrzahl von vorgegebenen Innenraumkonfigurationen (1a, 1b) anhand der bestimmten Nutzungssituation ausgewählt wird,
**dadurch gekennzeichnet, dass** die Sensoreinrichtung ausgeführt ist, zu erfassen, ob ein Fahrer den Fahrersitz (2) in Richtung Außenbereich oder in Richtung Wohnbereich (14) des Fahrerhauses (10) verlässt, und
- falls erfasst wird, dass der Fahrer den Fahrersitz in Richtung Außenbereich verlässt, die Ein-/Ausstiegskonfiguration ausgewählt wird; und
- falls erfasst wird, dass der Fahrer den Fahrersitz (2) in Richtung Wohnbereich (14) des Fahrerhauses (10) verlässt, eine der Nicht-Fahrbetriebskonfigurationen ausschließlich der Ein-/Ausstiegskonfiguration ausgewählt wird.

2. Verfahren nach Anspruch 1, **dadurch gekennzeichnet, dass** das mindestens eine Interieurelement zumindest eines der folgenden Interieurelemente umfasst: einen Fahrersitz (2), einen Beifahrersitz (5), eine Liege (9), einen Tisch, ein Lenkrad (8), eine Kühlbox (15), ein Hubdach, ein Staufach.

3. Verfahren nach einem der vorhergehenden Ansprüche, **dadurch gekennzeichnet, dass** eine Innenraumkonfiguration aus der Mehrzahl von vorgegebenen Innenraumkonfigurationen (1a, 1b) über eine von einem Nutzer betätigbare Auswahleinrichtung, z. B. über einen Schalter, ausgewählt wird.

4. Verfahren nach einem der vorhergehenden Ansprüchen, **dadurch gekennzeichnet, dass** die Mehrzahl von vorgegebenen Innenraumkonfigurationen (1a, 1b) umfasst: eine Fahrbetriebs-Konfiguration (1a), in der dem mindestens einen Interieurelement jeweils eine Verstellposition für den Fahrbetrieb zugeordnet ist, und mindestens eine Nicht-Fahrbetriebskonfiguration (1b), in der dem mindestens einen Interieurelement jeweils eine Verstellposition zur Nutzung des Fahrerhausinnenbereichs in einem Nicht-Fahrbetrieb zugeordnet ist.

5. Verfahren nach Anspruch 4, **dadurch gekennzeichnet, dass** in einer Nicht-Fahrbetriebskonfiguration (1b)
a) den Sitzen (2, 5) eine Verstellposition zugeordnet ist, die im Vergleich zu einer Fahrbetriebsstellung näher am Cockpit (11) ist;
b) dem Hubdach eine ausgefahrene Verstellposition zugeordnet ist; und/oder
c) der Kühlbox (15) eine ausgefahrene Verstellposition zugeordnet ist, zur verbesserten Zugänglichkeit der Kühlbox im Wohnbereich (14) des Fahrerhauses (10).

6. Verfahren nach Anspruch 4 oder 5, **dadurch gekennzeichnet, dass** die mindestens eine Nicht-Fahrbetriebskonfiguration eine Schlafkonfiguration umfasst,
a) in der den Sitzen (2, 5) eine Verstellposition zugeordnet ist, bei der eine Sitzfläche (3, 6) der Sitze (2, 5) im Vergleich zu einer Fahrbetriebsstellung näher an das Cockpit (11) verfahren ist,
b) in der einer Liegefläche (9) eine Verstellposition zugeordnet ist, bei der die Liegefläche (9, 9a) ausgefahren und/oder vergrößert ist; und/oder
c) in der einer Rückenlehne (7) eines Sitzes (5) eine Verstellposition zugeordnet ist, in der die Rückenlehne (7) eingeklappt ist, vorzugsweise in eine Horizontalstellung.

7. Verfahren nach einem der Ansprüchen 4 bis 6, **dadurch gekennzeichnet, dass** die mindestens eine Nicht-Fahrbetriebskonfiguration eine Ein-/Ausstiegskonfiguration umfasst, in der dem Fahrersitz (2) eine Verstellposition zugeordnet ist, in der der Fahrersitz sich im Vergleich zu einer Fahrbetriebsstellung in einer tieferen oder höheren und/oder zurückversetzten Stellung befindet.

8. Verfahren nach einem der Ansprüchen 4 bis 7, **dadurch gekennzeichnet, dass** die mindestens eine Nicht-Fahrbetriebskonfiguration eine Konfiguration umfasst, in der der Liegefläche (9) eine eingeklappte Verstellposition, verschließbaren Staufächern eine verschlossene Verstellposition und dem Hubdach eine eingefahrene Verstellposition zugeordnet ist.

9. Verfahren nach einem der vorhergehenden Ansprüche, **dadurch gekennzeichnet, dass** die Sensoreinrichtung zur Erfassung der Nutzungssituation zumindest eines der folgenden Signale umfasst:
a) ein Ausgabesignal einer Kamera, die zur Überwachung des Fahrerhausinnenbereichs ausgebildet ist, b) ein Zündsignal, c) ein Signal, das indikativ für eine Sitzplatzbelegung ist, d) ein Sprach- oder Geräuschsignal aus dem Fahrerhaus (10), e) ein Signal, das eine Aktivierung einer Kippvorrichtung des Fahrerhaus (10) anzeigt, f) ein Signal, das indikativ für eine Interaktion mit mindestens einem Interieurelement und/oder einem im Fahrerhaus (10) angeordneten elektrischen Gerät ist, g) ein Signal, das indikativ für einen Beleuchtungszustand im Fahrerhaus (10) ist.

10. Verfahren nach einem der vorhergehenden Ansprüche, **dadurch gekennzeichnet, dass** jeder Innenraumkonfiguration (1a, 1b) eine Innenraumbeleuchtungseinstellung des Fahrerhauses (10) zugeordnet ist.

11. Vorrichtung, die ausgebildet ist, ein Verfahren zur Auswahl und automatischen Einstellung einer Innenraumkonfiguration eines Fahrerhauses (10) eines Nutzfahrzeugs gemäß einem der Ansprüche 1-10 durchzuführen, umfassend: eine Steuereinrichtung (20), die ausgebildet ist, a) in Abhängigkeit von den Signalen einer Sensoreinrichtung und/ oder einer Auswahleinrichtung eine Innenraumkonfiguration des Fahrerhauses (10) aus einer Mehrzahl von vorgegebenen Innenraumkonfigurationen (1a, 1b) auszuwählen, wobei jede Innenraumkonfiguration mindestens einem Interieurelement des Fahrerhauses (10) jeweils eine Verstellposition zuordnet, b) die ausgewählte Innenraumkonfiguration einzustellen, wobei das mindestens eine Interieurelement jeweils aus einer bisherigen Verstellposition in eine der ausgewählten Innenraumkonfiguration zugeordnete Verstellposition bewegt wird, mittels eines dem jeweiligen Interieurelement zugeordneten Verstellantriebs zur Erzeugung der zur Verstellbewegung des jeweiligen Interieurelements erforderlichen Verstellkraft.

12. Nutzfahrzeug, mit einer Vorrichtung nach Anspruch 11.

## Claims

1. Method for selecting and automatically setting an interior configuration (1a, 1b) of a driver's cab (10) of a commercial vehicle, comprising the steps:
a) selecting an interior configuration of the driver's cab (10) from a multiplicity of prespecified interior configurations (1a, 1b), wherein each interior configuration assigns (S2) in each case one adjustment position to at least one interior element of the driver's cab (10), wherein an interior element can be moved from a driving position into at least a living position and vice versa,
b) automatically setting the selective interior configuration (S3), wherein the at least one interior element is moved in each case from a previous adjustment position into an adjustment position which is assigned to the selected interior configuration, by means of an adjustment drive which is assigned to the respective interior element and has the purpose of generating the adjustment force which is necessary for the adjustment movement of the respective interior element,
wherein a situation of use of the interior of the driver's cab (10) is determined (S1) in accordance with signals of a sensor device, and in that the configuration of the interior is selected from the multiplicity of prespecified interior configurations (1a, 1b) on the basis of the determined situation of use,
**characterized in that** the sensor device is designed to sense whether a driver leaves the driver's seat (2) in the direction of the outer area or in the direction of the living area (14) of the driver's cab (10), and
- if it is sensed that the driver leaves the driver's seat in the direction of the outer area, the entry/exit configuration is selected; and
- if it is sensed that the driver leaves the driver's seat (2) in the direction of the living area (14) of the driver's cab (10), one of the non-driving-mode configurations excluding the entry/exit configuration is selected.

2. Method according to Claim 1, **characterized in that** the at least one interior element comprises at least one of the following interior elements: a driver's seat (2), a co-driver's seat (5), a sleeper berth (9), a table, a steering wheel (8), a cool box (15), a lifting roof, a storage compartment.

3. Method according to one of the preceding claims, **characterized in that** an interior configuration is selected from the multiplicity of prespecified interior configurations (1a, 1b) by means of a selection device which can be activated by a user, e.g. by means of a switch.

4. Method according to one of the preceding claims, **characterized in that** the multiplicity of prespecified interior configurations (1a, 1b) comprises a driving-mode configuration (1a) in which in each case an adjustment position for the driving mode is assigned to the at least one interior element, and at least one non-driving-mode configuration (1b) in which in each case an adjustment position for using the driver's cab inner area in a non-driving mode is assigned to the at least one interior element.

5. Method according to Claim 4, **characterized in that** in a non-driving-mode configuration (1b)
a) the seats (2, 5) are assigned an adjustment position which is closer to the cockpit (11) in comparison with a driving mode position;
b) the lifting roof is assigned an extended adjustment position; and/or
c) the cooling box (15) is assigned an extended adjustment position for improved accessibility of the cooling box in the living area (14) of the driver's cab (10) .

6. Method according to Claims 4 or 5, **characterized in that** the at least one non-driving-motor configuration comprises a sleeping configuration,
a) in which the seats (2, 5) are assigned an adjustment position in which a sitting surface (3, 6) of the seats (2, 5) is moved closer to the cockpit (11) in comparison with the driving mode position,
b) in which a lying surface (9) is assigned an adjustment position in which the lying surface (9, 9a) is extended and/or enlarged; and/or
c) in which a backrest (7) of a seat (5) is assigned an adjustment position in which the backrest (7) is folded in, preferably into a horizontal position.

7. Method according to one of Claims 4 to 6, **characterized in that** the at least one non-driving-mode configuration comprises an entry/exit configuration in which the driver's seat (2) is assigned an adjustment position in which the driver's seat is located at a lower or higher and/or set-back position in comparison with the driving mode position.

8. Method according to one of Claims 4 to 7, **characterized in that** the at least one non-driving-mode configuration comprises a configuration in which the lying surface (9) is assigned a folded-in adjustment position, closable storage compartments are assigned a closed adjustment position, and the lifting roof is assigned a retracted adjustment position.

9. Method according to one of the preceding claims, **characterized in that** the sensor device comprises, for sensing the situation of use, at least one of the following signals:
a) an output signal of a camera which is designed to monitor the interior area of the driver's cab, b) an ignition signal, c) a signal which is indicative of occupation of a seating place, d) a voice signal or noise signal from the driver's cab (10), e) a signal which indicates activation of a tilting device of the driver's cab (10), f) a signal which is indicative of an interaction with at least one interior element and/or an electrical device which is arranged in the driver's cab (10), g) a signal which is indicative of a state of illumination in the driver's cab (10).

10. Method according to one of the preceding claims, **characterized in that** each interior configuration (1a, 1b) is assigned an interior lighting setting of the driver's cab (10).

11. Device which is designed to carry out a method for selecting and automatically setting an interior configuration of a driver's cab (10) of a utility vehicle according to one of Claims 1-10, comprising a control device (20) which is designed a) to select an interior configuration of the driver's cab (10) from a multiplicity of prespecified interior configurations (1a, 1b) in accordance with the signals of a sensor device and/or a selection device, wherein each interior configuration assigns in each case one adjustment position to at least one interior element of the driver's cab (10), b) to set the selected interior configuration, wherein the at least one interior element is moved in each case from a previous adjustment position into an adjustment position assigned to the selected interior configuration, by means of an adjustment drive which is assigned to the respective interior element and has the purpose of generating the adjustment force which is necessary for the adjustment movement of the respective interior element.

12. Commercial vehicle having a device according to Claim 11.

## Revendications

1. Procédé de sélection et de réglage automatique d'une configuration d'espace intérieur (la, 1b) d'une cabine (10) d'un véhicule utilitaire, le procédé comprenant les étapes suivantes :
a) sélectionner une configuration d'espace intérieur de la cabine (10) parmi une pluralité de configurations d'espace intérieur prédéterminées (la, 1b), chaque configuration d'espace intérieur associant une position de réglage (S2) à chacun des au moins un élément intérieur de lacabine (10), un élément intérieur pouvant être déplacé d'une position de mode de conduite dans au moins une position de vie et inversement,
b) régler automatiquement la configuration d'espace intérieur sélectionnée (S3), l'au moins un élément intérieur étant déplacé d'une position de réglage précédente à une position de réglage associée à la configuration d'espace intérieur sélectionnée au moyen d'un mécanisme de réglage associé à l'élément intérieur respectif pour générer la force de réglage requise pour le mouvement de régler l'élément intérieur respectif, une situation d'utilisation de l'espace intérieur de la cabine (10) étant déterminée en fonction de signaux d'un dispositif de détection (S1) et que la configuration d'espace intérieur étant sélectionnée parmi la pluralité de configurations d'espace intérieur prédéfinies (1a, 1b) sur la base de la situation d'utilisation déterminée,
**caractérisé en ce que** le dispositif de détection est conçu pour détecter si un conducteur quitte le siège de conducteur (2) en direction de la zone extérieure ou en direction de la zone de logement (14) de la cabine (10), et
- dans le cas où il est détecté que le conducteur quitte le siège de conducteur en direction de la zone extérieure, la configuration entrée/sortie est sélectionnée ; et
- dans le cas où il est détecté que le conducteur quitte le siège de conducteur (2) en direction de la zone de logement (14) de la cabine (10), une des configurations de mode de non-conduite, à l'exclusion de la configuration d'entrée/de sortie, est sélectionnée.

2. Procédé selon la revendication 1, **caractérisé en ce que** l'au moins un élément intérieur comprend l'un au moins des éléments intérieurs suivants : un siège de conducteur (2), un siège de passager (5), une couchette (9), une table, un volant (8), une glacière (15), un toit ouvrant, un compartiment de rangement.

3. Procédé selon l'une des revendications précédentes, **caractérisé en ce qu'**une configuration d'espace intérieur parmi la pluralité de configurations d'espace intérieur prédéterminées (1a, 1b) est sélectionnée par le biais d'un moyen de sélection, par exemple un commutateur, pouvant être actionné par l'utilisateur.

4. Procédé selon l'une des revendications précédentes, **caractérisé en ce que** la pluralité de configurations d'espace intérieure prédéterminées (1a, 1b) comprend : une configuration de mode de conduite (1a) chacun des au moins un élément intérieur est associé à une position de réglage du mode de conduite, et au moins une configuration de mode non-conduite (1b) chacun des au moins un élément intérieur est associé à une position de réglage pour l'utilisation de la zone de cabine dans un mode de non-conduite.

5. Procédé selon la revendication 4, **caractérisé en ce que** dans une configuration de mode de non-conduite (1b)
a) les sièges (2, 5) sont associés à une position de réglage qui est plus proche du cockpit (11) par rapport à une position de mode de conduite ;
b) le toit relevable est associé à une position de réglage étendue ; et/ou
c) la glacière (15) est associée à une position de réglage étendue pour une meilleure accessibilité de la glacière dans la zone de vie (14) de la cabine (10).

6. Procédé selon la revendication 4 ou 5, **caractérisé en ce que** l'au moins une configuration de mode de non-conduite comprend une configuration de sommeil,
a) dans laquelle les sièges (2, 5) sont associés à une position de réglage dans laquelle une assise (3, 6) des sièges (2, 5) est rapprochée du cockpit (11) par rapport à une position de mode de conduite,
b) dans laquelle une surface de couchage (9) est associée à une position de réglage dans laquelle la surface de couchage (9, 9a) est étendue et/ou agrandie ; et/ou
c) dans laquelle le dossier (7) d'un siège (5) est associé à une position de réglage dans laquelle le dossier (7) est rabattu, de préférence dans une position horizontale.

7. Procédé selon l'une des revendications 4 à 6, **caractérisé en ce que** l'au moins une configuration de mode de non-conduite comprend une configuration d'entrée/de sortie dans laquelle le siège de conducteur (2) est associé à une position de réglage dans laquelle le siège de conducteur se trouve dans une position plus basse ou plus haute et/ou reculée par rapport à une position de conduite.

8. Procédé selon l'une des revendications 4 à 7, **caractérisé en ce que** l'au moins une configuration de mode de non-conduite comprend une configuration dans laquelle la surface de couchage (9) est associée à une position de réglage rabattue, des compartiments de rangement pouvant être fermés sont associés à une position de réglage fermée et le toit relevable est associé à une position de réglage rétractée.

9. Procédé selon l'une des revendications précédentes, **caractérisé en ce que** le dispositif de détection destiné à détecter la situation d'utilisation comprend l'un au moins des signaux suivants :
a) un signal de sortie d'une caméra conçue pour surveiller la zone intérieure de la cabine, b) un signal d'allumage, c) un signal indiquant l'occupation d'un siège, d) un signal vocal ou sonore provenant de la cabine (10), e) un signal indiquant une activation d'un dispositif basculant de la cabine (10), f) un signal indiquant une interaction avec au moins un élément intérieur et/ou un appareil électrique disposé dans la cabine (10), g) un signal indiquant un état d'éclairage dans la cabine (10).

10. Procédé selon l'une des revendications précédentes, **caractérisé en ce que** chaque configuration d'espace intérieur (1a, 1b) est associée à un réglage d'éclairage d'espace intérieur de la cabine (10).

11. Dispositif conçu pour mettre en œuvre un procédé de sélection et de réglage automatique d'une configuration d'espace intérieur d'une cabine (10) d'un véhicule utilitaire selon l'une des revendications 1 à 10, le dispositif comprenant : un moyen de commande (20) conçu a) pour sélectionner une configuration d'espace intérieur de la cabine (10) parmi une pluralité de configurations d'espace intérieur prédéterminées (1a, 1b) en fonction des signaux d'un moyen de détection et/ou d'un moyen de sélection, chaque configuration d'espace intérieur associant une position de réglage à chacun des au moins un élément intérieur de la cabine (10), b) pour régler la configuration d'espace intérieur sélectionnée, chacun des au moins un élément intérieur étant déplacé d'une position de réglage précédente dans une position de réglage associée à la configuration d'espace intérieur sélectionnée au moyen d'un entraînement de réglage associé à l'élément intérieur respectif pour générer la force de réglage requise pour régler l'élément intérieur respectif.

12. Véhicule utilitaire, comprenant un dispositif selon la revendication 11.
